# EUROPEAN PATENT SPECIFICATION

(11) **EP 3 137 322 B1**
(45) Date of publication and mention of the grant of the patent: **08.05.2019**
(21) Application number: 15716539.0
(22) Date of filing: 16.04.2015
(51) Int. Cl.: B60H 1/00

(54) **SUCTION DEVICE OF A VEHICLE AIR-CONDITIONING SYSTEM**
SAUGVORRICHTUNG EINER FAHRZEUGKLIMAANLAGE
DISPOSITIF D'ASPIRATION D'UN SYSTÈME DE CLIMATISATION DE VÉHICULE

(30) Priority: 28.04.2014 DE 102014105896
(43) Date of publication of application: 08.03.2017
(73) Proprietor: Valeo Klimasysteme GmbH, 96476 Bad Rodach (DE)
(72) Inventor: HERZOG, Anton, 96479 Weitramsdorf (DE); GÄRTNER, Stefan, 96476 Bad Rodach (DE)
(74) Representative: Metz, Gaëlle
(86) International application number: PCT/EP2015/058296
(87) International publication number: WO 2015/165742

(56) References cited:
- WO-A1-2014/036207
- DE-A1- 19 936 688
- DE-C1- 10 012 972
- FR-A1- 2 786 437
- JP-A- 2008 254 576
- JP-U- S5 713 307

## Description

The invention relates to a suction device of a vehicle air-conditioning system having a suction chamber for fresh air and/or recycling air, a ventilator fan unit which adjoins the suction chamber via a suction opening, a fresh air channel which opens into the suction chamber via a fresh air opening, and a recycling air channel which opens into the suction chamber via a recycling air opening.

A suction device of a vehicle air-conditioning system, according to the preamble of claim 1, is known from FR 2 786 437 A1. Conventionally, both the fresh air opening and the recycling air opening can be selectively closed, partially opened or completely opened by means of a flap, in order to produce in the vehicle inner space a desired fresh air flow, recycling air flow or mixed air flow.

The suction unit of a vehicle air-conditioning system is conventionally a unit which is closed in a self-contained manner, which is even partially pre-assembled and via which air from the environment is drawn, where applicable filtered and conveyed via a fan to the air-conditioning system. Whilst the suction of the fresh air via the fresh air channel is generally largely determined by openings in the engine hood or in the transition region between the engine hood and windshield, when the recycling air is drawn via the recycling air channel, there is the possibility of drawing air from the region of the dashboard or from the region of the foot space.

In the event of suction in the region of the dashboard, however, the recycling air channel forms a direct noise bridge between the ventilator fan and a head region of the front-seat passengers in an undesirable manner. The fan noises may then under some circumstances be perceived by the front-seat passengers via the recycling air channel and be found to be disruptive.

For this reason, suction of recycling air from the foot space is often preferred in the vehicles since the noise path from the ventilator fan via the recycling air channel to the head region of the front-seat passengers is in this instance significantly longer so that ventilator noises are generally not perceived.

When recycling air is drawn from the foot space, however, during "mixed air operation", that is to say, when the fresh air and the recycling air opening are released at the same time, the problem may arise that in exceptional situations (for example, in the event of unfavorable water action in the washing unit, heavy rain or damaged seals), dripping water or water splashes may reach the foot space of the vehicle via the fresh air opening and the (lower) recycling air opening.

An object of the invention is to provide a suction device for a vehicle air-conditioning system in which the recycling air suction is carried out via the foot space for acoustic reasons, the foot space being protected from undesirable introduction of water, in particular also during mixed air operation of the vehicle air conditioning system.

This object is achieved according to the invention by a suction device of a vehicle air-conditioning system, having a suction chamber for fresh air and/or recycling air, a ventilator fan unit, which adjoins the suction chamber via a suction opening, a fresh air channel which opens into the suction chamber via a fresh air opening and at least two fresh air flaps which are connected in parallel for common control of the air flow in the fresh air opening, and a recycling air channel which opens into the suction chamber via a recycling air opening and which has at least one recycling air flap for controlling the air flow at the recycling air opening, wherein, in the installation state of the suction device, a first fresh air flap is arranged lower than a second fresh air flap and the at least one recycling air flap is arranged lower than the first fresh air flap, wherein, in a mixed air position of the suction device, the first fresh air flap is closed and the second fresh air flap and the at least one recycling air flap are at least partially opened. The closure of the lower (with respect to the gravitational force direction in the installation state) first fresh air flap protects the suction chamber in an effective manner against incoming water splashes. The fresh air required in the mixed air position flows via the higher, at least partially opened second fresh air flap and is mixed in the suction chamber with the recycling air which flows via the at least partially opened recycling air flap.

In an embodiment of the suction device, the fresh air flaps are mechanically coupled to each other, in particular by means of a cam disc. As a result of the mechanical coupling of the fresh air flaps, a desired opening or closure behavior of all the fresh air flaps can be produced with only one flap drive. Starting from a closed position of all the fresh air flaps (recycling position of the suction device), when the flap drive is activated, for example, via the cam disc, only the higher second fresh air flap is opened, whilst the lower first fresh air flap initially remains closed (mixed air position of the suction device) and is also opened only during further operation of the flap drive (fresh air position of the suction device). Accordingly, starting from an open position of all the fresh air flaps (fresh air position), the lower first fresh air flap is initially closed (mixed air position) before the higher second fresh air flap is also closed (recycling position). Alternatively, separate flap drives may be provided for the first fresh air flap and the second fresh air flap which is, however, structurally more complex and consequently significantly more expensive.

Alternatively or in addition, the fresh air flaps and the at least one recycling air flap may also be mechanically coupled to each other, in particular by means of a cam disc. In this manner, recycling and fresh air flaps can be activated by means of a common flap drive. It is naturally also conceivable for the fresh air flaps and the at least one recycling air flap to be activated by means of separate flap drives which is, however, generally structurally more complex and consequently significantly more expensive.

Preferably, the fresh air flaps and/or the at least one recycling air flap are pivotable closing flaps which can be pivoted between an open position and a closed position. As a result of such pivotable closing flaps, an air flow at the fresh air or recycling air opening can be controlled in a simple, inexpensive and reliable manner with a small structural spatial requirement.

In another embodiment of the suction device, in the installation state of the suction device, the fresh air opening and the recycling air opening are located at least partially one above the other when viewed vertically from above. When viewed in the longitudinal direction of the vehicle, this leads to a particularly compact construction of the suction device.

In particular, there is associated with each fresh air flap a partial cross-section of the fresh air opening, which cross-section can be closed by the respective fresh air flap, wherein, in the installation state of the suction device, a partial cross-section which is associated with the first fresh air flap is preferably located at least partially over the recycling air opening when viewed vertically from above. As already mentioned above, this leads to a particularly compact construction of the suction device. As long as the closed first fresh air flap in the mixed air position of the suction device completely covers the recycling air opening, water which is introduced via the fresh air opening cannot drip directly into the recycling air opening and consequently also cannot directly reach the foot space of the vehicle.

In particular there is associated with each fresh air flap a partial cross-section of the fresh air opening, which cross-section can be closed by the respective fresh air flap, wherein, in the installation state of the suction device, a partial cross-section which is associated with the second fresh air flap is located in a particularly preferred manner outside the recycling air opening when viewed vertically from above. Consequently, in the mixed air position, water which is introduced via the fresh air opening, specifically via the partial cross-section of the fresh air opening associated with the second fresh air flap, is prevented in a simple manner from dripping directly into the at least partially opened recycling air opening and reaching the foot space of the vehicle.

Preferably, in the installation state of the suction device, the fresh air opening defines a plane which extends obliquely with respect to a horizontal plane and forms with the horizontal plane in a particularly preferred manner an angle α with 30° ≤ α ≤ 90°.

Preferably, in the installation state of the suction device, the recycling air opening also defines a plane which extends obliquely with respect to a horizontal plane and forms with the horizontal plane in a particularly preferred manner an angle β with 0° ≤ β ≤ 60°.

Finally, in the installation state of the suction device, the suction opening may also define a plane which extends in a substantially vertical manner, wherein the wording "substantially vertical" is intended to include deviations with respect to the vertical direction of up to ±10°, in particular up to ±5°.

It is further preferable for a plane defined by the fresh air opening and a plane defined by the recycling air opening to intersect and open in a V-shaped manner with respect to the ventilator fan unit.

These previously described geometric definitions for limiting the suction chamber advantageously contribute to a particularly compact construction of the suction device.

In another embodiment of the suction device, the recycling air channel has a plurality of recycling air flaps which are connected in parallel for common control of the air flow at the recycling air opening, wherein, in a mixed air position of the suction device, the first fresh air flap and at least one of the recycling air flaps are closed and the second fresh air flap and at least one of the recycling air flaps are at least partially opened.

In particular in the installation state of the suction device, a first recycling air flap is arranged lower than the first fresh air flap and higher than a second recycling air flap, wherein, in a mixed air position of the suction device, the first fresh air flap and the first recycling air flap are closed and the second fresh air flap and the second recycling air flap are at least partially opened. A partial cross-section of the recycling air opening, which is considered to be critical with respect to undesirable introduction of water, can consequently be closed by the first recycling air flap in the mixed air position of the suction device. The recycling air flow required for the mixed air operation is then ensured via another partial cross-section of the recycling air opening, with which cross-section the at least partially opened second recycling air flap is associated.

In this embodiment, in the mixed air position of the suction device, the at least partially opened second recycling air flap may have a recess for receiving and storing fluid (in particular water). Small quantities of water which strike the second recycling air flap in the mixed air position of the suction device can be collected in this recess and consequently do not flow in an undesirable manner from the second recycling air flap through the recycling air opening into the foot space of the vehicle.

Other features and advantages of the invention will be appreciated from the following description of preferred embodiments with reference to the drawings, in which:
- Figure 1 is a schematic longitudinal section through a suction device according to the invention of a vehicle air-conditioning system in a fresh air position;
- Figure 2 is a schematic longitudinal section of the suction device according to Figure 1 in a recycling air position;
- Figure 3 is a schematic longitudinal section of the suction device according to Figure 1 in a mixed air position;
- Figure 4 is a schematic longitudinal section through another embodiment of a suction device according to the invention of a vehicle air-conditioning system in a mixed air position; and
- Figure 5 is a schematic longitudinal section through another embodiment of the suction device according to the invention of a vehicle air-conditioning system in a mixed air position.

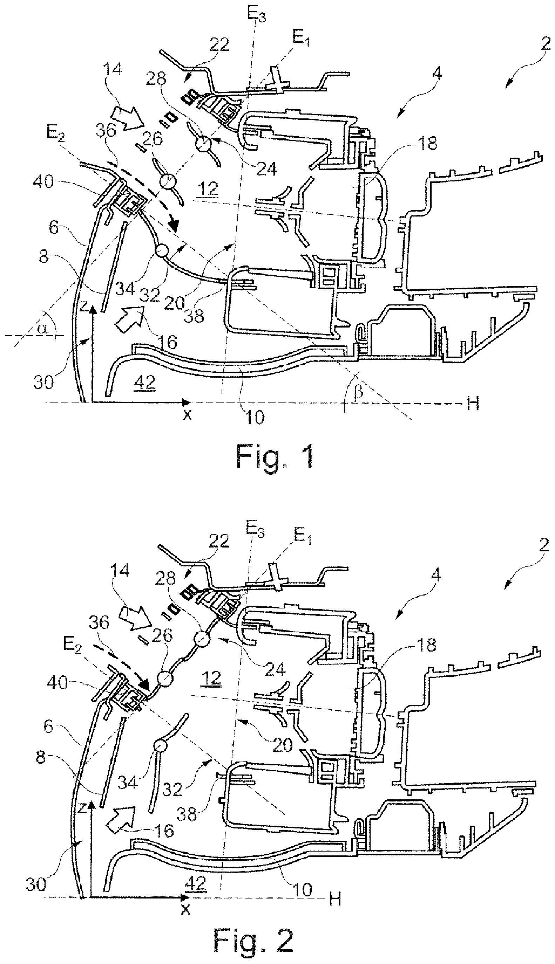

Figures 1 to 3 show a cut-out of a vehicle 2 in the region of a suction device 4 of an air-conditioning system. The vehicle 2 comprises a bulkhead 6 which separates an engine compartment from a passenger space of the vehicle 2, wherein there is provided adjacent to the bulkhead 6 a sound absorption member 8 which damps noises which are produced in the engine compartment in such a manner that they are not perceived to be disruptive in the passenger space. Furthermore, there is indicated a foot space covering 10 which delimits a foot space 42 of the front-seat passengers in an upward direction, but which is generally not constructed in a water-tight manner. The sound absorption member 8 and the foot space covering 10 further also contribute to a damping of fan noises of the vehicle air-conditioning system so that they can hardly be perceived, even by front-seat passengers in the passenger space.

The suction device 4 of the vehicle air-conditioning system comprises according to Figures 1 to 3 a suction chamber 12 for fresh air 14 and/or recycling air 16, a ventilator fan unit 18 which adjoins the suction chamber 12 via a suction opening 20, a fresh air channel 22 which opens via a fresh air opening 24 into the suction chamber 12 and which has two fresh air flaps 26, 28 which are connected in parallel for common control of the air flow at the fresh air opening 24, and a recycling air channel 30 which opens into the suction chamber 12 via a recycling air opening 32 and a recycling air flap 34 for controlling the air flow at the recycling air opening 32. The fresh air flaps 26, 28 are in this instance referred to as being "connected in parallel" since each fresh air flap 26, 28 covers only a partial cross-section of the fresh air opening 24 so that the fresh air opening 24 is completely closed only in a closed position of all the fresh air flaps 26, 28.

The suction device 4 is illustrated in Figures 1 to 3 in the installation state thereof in each case so that the x axis which is drawn corresponds to a longitudinal direction of the vehicle and the z axis which is drawn corresponds to a vertical direction.

In the illustrated installation state of the suction device 4, a first fresh air flap 26 is arranged lower with respect to the gravitational force direction than a second fresh air flap 28 and the at least one recycling air flap 34 is arranged lower than the first fresh air flap 26.

According to Figure 1, the suction device 4 is located in its so-called fresh air position, in which the fresh air opening 24 is (completely) released and the recycling air opening 32 is (completely) closed. Specifically, in the fresh air position of the suction device 4, all the fresh air flaps 26, 28 are in the open position and all the recycling air flaps 34 are in the closed position thereof.

In exceptional situations, for example, in the event of unfavorable action of water in the washing unit, heavy rain or damaged seals, dripping water or water splashes 36 can reach the suction chamber 12 via the fresh air opening 24, but not the recycling air channel 30. This is because the water 36 which is introduced into the suction chamber 12 is directed through the closed recycling air flap 34 to a discharge channel 38 and is thereby discharged to the vehicle environment.

According to Figure 2, the suction device 4 is located in its so-called recycling air position in which the fresh air opening 24 is (completely) closed and the recycling air opening 32 is (completely) released. Specifically, in the recycling air position, all the fresh air flaps 26, 28 are in the closed position and all the recycling air flaps 34 are in the open position thereof.

Dripping water or water splashes 36 which occur in exceptional cases cannot be introduced into the suction chamber 12 of the suction device 4 as a result of the closed fresh air flaps 26, 28, but is/are instead discharged via a discharge channel 40 in the fresh air channel 22 in a defined manner (for example, via a hose to the condensed water discharge of the vehicle air-conditioning system) to the vehicle environment.

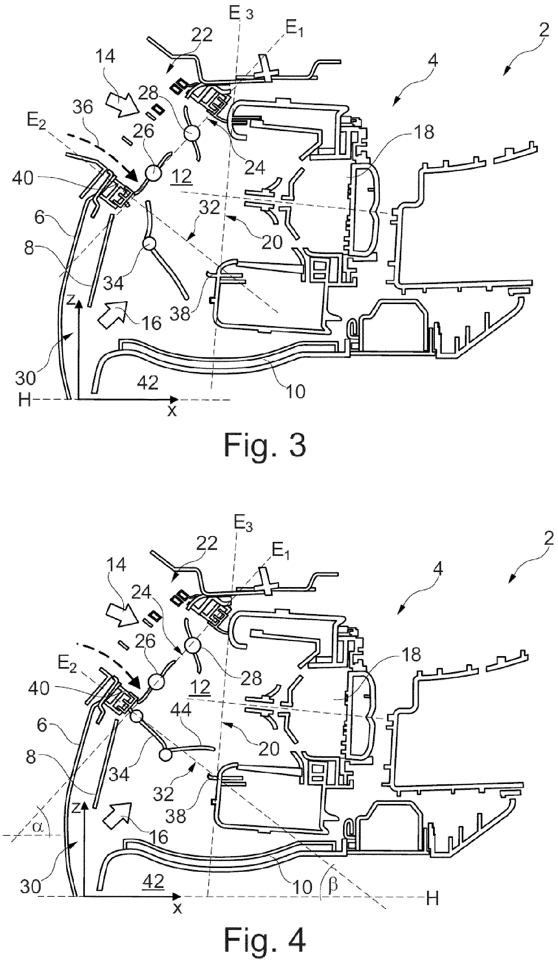

According to Figure 3, the suction device 4 is in its so-called mixed air position in which both the fresh air opening 24 and the recycling air opening 32 are (partially) released. In order to prevent or at least to reduce an undesirable introduction of dripping or water splashes 36 via the fresh air opening 24 here, the suction chamber 12 and the recycling air opening 32 in the foot space 42 of the vehicle 2, it has been found to be advantageous for the first fresh air flap 26 to be closed and the second fresh air flap 28 and the at least one recycling air flap 34 to be at least partially opened.

In the present embodiment, both the fresh air flaps 26, 28 are mechanically coupled together and the fresh air flaps 26, 28 and the recycling air flap 34 are mechanically coupled to each other so that only one flap drive is required. The mechanical coupling is preferably carried out in this instance by means of a cam disc which is not illustrated.

Both the fresh air flaps 26, 28 and the recycling air flap 34 are according to Figures 1 to 3 pivotable closing flaps which can each be pivoted between an open position and a closed position.

In the installation state of the suction device 4, the fresh air opening 24 and the recycling air opening 32 are located at least partially one above the other when viewed vertically from above. This contributes in the x direction to a particularly compact construction of the suction device 4.

In particular there is associated with each fresh air flap 26, 28 a partial cross-section of the fresh air opening 24, which cross-section can be closed by the fresh air flap 26, 28 wherein, in the illustrated installation state of the suction device 4, a partial cross-section which is associated with the first fresh air flap 26 is located at least partially over the recycling air opening 32 when viewed vertically from above (see Figures 1 to 3).

In the construction variant according to Figures 1 to 3, a partial cross-section which is associated with the first fresh air flap 26 is located only partially over the recycling air opening 32 when viewed vertically from above so that dripping water or water splashes 36 from the fresh air opening 24 could flow directly into the recycling air opening 32 and could consequently reach the foot space 42. However, it has been found that water splashes 36 are reliably kept away from the closed first fresh air flap 26 and dripping water 36 is drawn, when the ventilator fan unit 18 is activated, into the ventilator fan unit before reaching the recycling air opening and is discharged thereby to the vehicle environment.

Ideally, however, in the mixed air position of the suction device 4, the closed, first fresh air flap 26 covers the recycling air opening 32 completely. That means in other words, in the installation state of the suction device 4, a partial cross-section of the fresh air opening 24, which cross-section is associated with the second fresh air flap 28, is located outside the recycling air opening 32 when viewed vertically from above. Dripping water or water splashes 36 which are introduced in the mixed air position of the suction device 4 consequently cannot drip or flow directly into the recycling air opening 32 and consequently also cannot directly reach the foot space 42 of the vehicle 2.

According to Figures 1 to 3, the fresh air opening 24 in the installation state of the suction device 4 defines a plane E₁ which extends in an oblique manner with respect to a horizontal plane H and which preferably forms an angle α with the horizontal plane H, where: 30° ≤ α ≤ 90°. The recycling air opening 32 also defines in the installation state of the suction device 4 a plane E₂ which extends in an oblique manner with respect to the horizontal plane H and which preferably forms an angle β with the horizontal plane H, where: 0° < β ≤ 60°.

It can further be derived from Figures 1 to 3 that the plane E₁ defined by the fresh air opening 24 and the plane E₂ defined by the recycling air opening 32 intersect and open in a V-shaped manner in the direction toward the ventilator fan unit 18.

Finally, the suction opening 20 defines in the installation state of the suction device 4 a plane E₃ which extends substantially vertically.

As a result of this geometric configuration and delimitation of the suction chamber 12, there is produced in particular in the x direction an extremely compact construction of the suction device 4 with a small structural spatial requirement.

Figure 4 shows another embodiment of the suction device 4, which differs from the embodiment according to Figures 1 to 3 only in that the recycling air channel 30 in place of a recycling air flap 34 has two recycling air flaps 34, 44 connected in parallel for common control of the air flow at the recycling air opening 32. The recycling air flaps 34, 44 are in this instance said to be "connected in parallel" since each recycling air flap 34, 44 covers only a partial cross-section of the recycling air opening 32 so that the recycling air opening 32 is completely closed only in a closed position of all the recycling air flaps 34, 44.

In the illustrated mixed air position of the suction device 4, the first fresh air flap 26 and one of the recycling air flaps 34, 44 are closed and the second fresh air flap 28 and one of the recycling air flaps 34, 44 are at least partially opened.

The recycling air opening 32 which can be closed by the recycling air flaps 34, 44 defines the plane E₂ which, in the installation state of the suction device 4, extends in an oblique manner with respect to the x axis so that a first recycling air flap 34 is arranged lower than the first fresh air flap 26 and higher than a second recycling air flap 44. In the illustrated mixed air position of the suction device 4, the first fresh air flap 26 and the first recycling air flap 34 are closed, whereas the second fresh air flap 28 and the second recycling air flap 44 are at least partially opened. A partial cross-section of the recycling air opening 32, which cross-section is associated with the first recycling air flap 34 and is considered to be critical with respect to undesirable introduction of water, can consequently be closed in the mixed air position of the suction device 4 by the first recycling air flap 34.

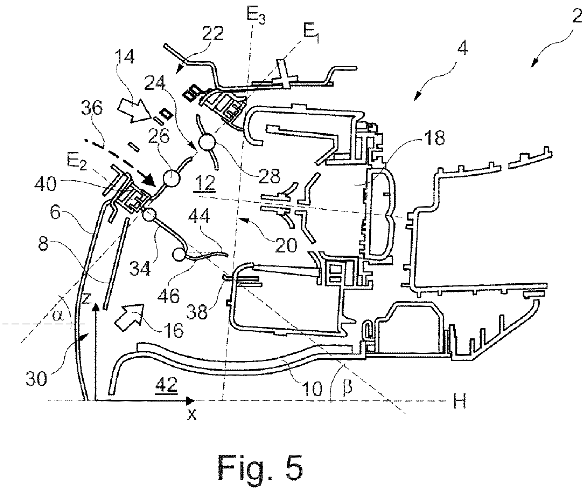

Figure 5 discloses another embodiment of the suction device 4 which differs from the embodiment according to Figure 4 only in that the second recycling air flap 44 which is at least partially open in the mixed air position of the suction device 4 has a recess 46 for receiving and storing dripping water 36. Dripping water 36 which is not drawn in by the ventilator fan unit 18 collects in this recess 46 and consequently does not reach the foot space 42 of the vehicle 2. As soon as the suction device 4 assumes its fresh air position again and consequently the second recycling air flap 44 assumes its closed position, the dripping water 36 which has accumulated in the recess 46 is discharged in a defined manner via the discharge channel 38 (for example, via a hose to the condensed water discharge of the vehicle air-conditioning system) to the vehicle environment.

## Claims

1. A suction device of a vehicle air-conditioning system, having
a suction chamber (12) for fresh air (14) and/or recycling air (16),
a ventilator fan unit (18) which adjoins the suction chamber (12) via a suction opening (20),
a fresh air channel (22) which opens into the suction chamber (12) via a fresh air opening (24) and at least two fresh air flaps (26, 28) which are connected in parallel for common control of the air flow at the fresh air opening (24), and
a recycling air channel (30) which opens into the suction chamber (12) via a recycling air opening (32) and which has at least one recycling air flap (34) for controlling the air flow at the recycling air opening (32),
wherein, in the installation state of the suction device (4), a first fresh air flap (26) is arranged lower than a second fresh air flap (28) and the at least one recycling air flap (34) is arranged lower than the first fresh air flap (26), **characterized in that**, in a mixed air position of the suction device (4), the first fresh air flap (26) is closed and the second fresh air flap (28) and the at least one recycling air flap (34) are at least partially opened.

2. The suction device as claimed in claim 1, **characterized in that** the fresh air flaps (26, 28) are mechanically coupled to each other, in particular by means of a cam disc.

3. The suction device as claimed in claim 1 or claim 2, **characterized in that** the fresh air flaps (26, 28) and the at least one recycling air flap (34) are mechanically coupled to each other, in particular by means of a cam disc.

4. The suction device as claimed in one of the preceding claims, **characterized in that** the fresh air flaps (26, 28) are pivotable closing flaps.

5. The suction device as claimed in one of the preceding claims, **characterized in that** the at least one recycling air flap (34) is a pivotable closing flap.

6. The suction device as claimed in one of the preceding claims, **characterized in that**, in the installation state of the suction device (4), the fresh air opening (24) and the recycling air opening (32) are located at least partially one above the other when viewed vertically from above.

7. The suction device as claimed in one of the preceding claims, **characterized in that** there is associated with each fresh air flap (26, 28) a partial cross-section of the fresh air opening (24), which cross-section can be closed by the respective fresh air flap (26, 28), wherein, in the installation state of the suction device (4), a partial cross-section which is associated with the first fresh air flap (26) is located at least partially over the recycling air opening (32) when viewed vertically from above.

8. The suction device as claimed in one of the preceding claims, **characterized in that** there is associated with each fresh air flap (26, 28) a partial cross-section of the fresh air opening (24), which cross-section can be closed by the respective fresh air flap (26, 28), wherein, in the installation state of the suction device (4), a partial cross-section which is associated with the second fresh air flap (28) is located outside the recycling air opening (32) when viewed vertically from above.

9. The suction device as claimed in one of the preceding claims, **characterized in that**, in the installation state of the suction device (4), the fresh air opening (24) defines a plane (E₁) which extends obliquely with respect to a horizontal plane (H).

10. The suction device as claimed in one of the preceding claims, **characterized in that**, in the installation state of the suction device (4), the recycling air opening (32) defines a plane (E₂) which extends obliquely with respect to a horizontal plane (H) .

11. The suction device as claimed in one of the preceding claims, **characterized in that**, in the installation state of the suction device (4), the suction opening (20) defines a plane (E₃) which extends in a substantially vertical manner.

12. The suction device as claimed in one of the preceding claims, **characterized in that** a plane (E₁) defined by the fresh air opening (24) and a plane (E₂) defined by the recycling air opening (32) intersect and open in a V-shaped manner with respect to the ventilator fan unit (18).

13. The suction device as claimed in one of the preceding claims, **characterized in that** the recycling air channel (30) has a plurality of recycling air flaps (34, 44) which are connected in parallel for common control of the air flow at the recycling air opening (32), wherein, in a mixed air position of the suction device (4), the first fresh air flap (26) and at least one of the recycling air flaps (34, 44) are closed and the second fresh air flap (28) and at least one of the recycling air flaps (34, 44) are at least partially opened.

14. The suction device as claimed in claim 13, **characterized in that**, in the installation state of the suction device (4), a first recycling air flap (34) is arranged lower than the first fresh air flap (26) and higher than a second recycling air flap (44), wherein, in a mixed air position of the suction device (4), the first fresh air flap (26) and the first recycling air flap (34) are closed and the second fresh air flap (28) and the second recycling air flap (44) are at least partially opened.

15. The suction device as claimed in claim 14, **characterized in that**, in the mixed air position of the suction device (4), the at least partially opened second recycling air flap (44) has a recess (46) for receiving and storing fluid.

## Patentansprüche

1. Saugvorrichtung einer Fahrzeugklimaanlage, die Folgendes aufweist:
eine Saugkammer (12) für Frischluft (14) und/oder Umluft (16),
eine Lüfter-Gebläse-Einheit (18), die über eine Saugöffnung (20) an die Saugkammer (12) angrenzt,
einen Frischluftkanal (22), der sich über eine Frischluftöffnung (24) in die Saugkammer (12) öffnet, und wenigstens zwei Frischluftklappen (26, 28), die zur gemeinsamen Regelung des Luftstroms an der Frischluftöffnung (24) parallel geschaltet sind, und
einen Umluftkanal (30), der sich über eine Umluftöffnung (32) in die Saugkammer (12) öffnet und der wenigstens eine Umluftklappe (34) aufweist, um den Luftstrom an der Umluftöffnung (32) zu regeln,
wobei im Einbauzustand der Saugvorrichtung (4) eine erste Frischluftklappe (26) tiefer als eine zweite Frischluftklappe (28) angeordnet ist und die wenigstens eine Umluftklappe (34) tiefer als die erste Frischluftklappe (26) angeordnet ist,
**dadurch gekennzeichnet, dass** in einer Mischluftstellung der Saugvorrichtung (4) die erste Frischluftklappe (26) geschlossen ist und die zweite Frischluftklappe (28) und die wenigstens eine Umluftklappe (34) wenigstens zum Teil geöffnet sind.

2. Saugvorrichtung nach Anspruch 1, **dadurch gekennzeichnet, dass** die Frischluftklappen (26, 28) mechanisch miteinander gekoppelt sind, insbesondere mittels einer Nockenscheibe.

3. Saugvorrichtung nach Anspruch 1 oder Anspruch 2, **dadurch gekennzeichnet, dass** die Frischluftklappen (26, 28) und die wenigstens eine Umluftklappe (34) mechanisch miteinander gekoppelt sind, insbesondere mittels einer Nockenscheibe.

4. Saugvorrichtung nach einem der vorhergehenden Ansprüche, **dadurch gekennzeichnet, dass** die Frischluftklappen (26, 28) drehbar schließende Klappen sind.

5. Saugvorrichtung nach einem der vorhergehenden Ansprüche, **dadurch gekennzeichnet, dass** die wenigstens eine Umluftklappe (34) eine drehbar schließende Klappe ist.

6. Saugvorrichtung nach einem der vorhergehenden Ansprüche, **dadurch gekennzeichnet, dass** sich im Einbauzustand der Saugvorrichtung (4) die Frischluftöffnung (24) und die Umluftöffnung (32) in einer vertikalen Sicht von oben wenigstens zum Teil übereinander befinden.

7. Saugvorrichtung nach einem der vorhergehenden Ansprüche, **dadurch gekennzeichnet, dass** mit jeder Frischluftklappe (26, 28) ein Teilquerschnitt der Frischluftöffnung (24) verbunden ist, wobei der Querschnitt durch die entsprechende Frischluftklappe (26, 28) geschlossen werden kann, wobei sich im Einbauzustand der Saugvorrichtung (4) ein Teilquerschnitt, der mit der ersten Frischluftklappe (26) verbunden ist, in einer vertikalen Sicht von oben wenigstens zum Teil über der Umluftöffnung (32) befindet.

8. Saugvorrichtung nach einem der vorhergehenden Ansprüche, **dadurch gekennzeichnet, dass** mit jeder Frischluftklappe (26, 28) ein Teilquerschnitt der Frischluftöffnung (24) verbunden ist, wobei der Querschnitt durch die entsprechende Frischluftklappe (26, 28) geschlossen werden kann, wobei sich im Einbauzustand der Saugvorrichtung (4) ein Teilquerschnitt, der mit der zweiten Frischluftklappe (28) verbunden ist, in einer vertikalen Sicht von oben außerhalb der Umluftöffnung (32) befindet.

9. Saugvorrichtung nach einem der vorhergehenden Ansprüche, **dadurch gekennzeichnet, dass** im Einbauzustand der Saugvorrichtung (4) die Frischluftöffnung (24) eine Ebene (E₁) definiert, die sich in Bezug auf eine horizontale Ebene (H) schräg erstreckt.

10. Saugvorrichtung nach einem der vorhergehenden Ansprüche, **dadurch gekennzeichnet, dass** im Einbauzustand der Saugvorrichtung (4) die Umluftöffnung (32) eine Ebene (E₂) definiert, die sich in Bezug auf eine horizontale Ebene (H) schräg erstreckt.

11. Saugvorrichtung nach einem der vorhergehenden Ansprüche, **dadurch gekennzeichnet, dass** im Einbauzustand der Saugvorrichtung (4) die Saugöffnung (20) eine Ebene (E₃) definiert, die sich auf eine im Wesentlichen vertikale Weise erstreckt.

12. Saugvorrichtung nach einem der vorhergehenden Ansprüche, **dadurch gekennzeichnet, dass** sich eine durch die Frischluftöffnung (24) definierte Ebene (E₁) und eine durch die Umluftöffnung (32) definierte Ebene (E₂) kreuzen und sich in Bezug auf die Lüfter-Gebläse-Einheit (18) auf eine V-förmige Weise öffnen.

13. Saugvorrichtung nach einem der vorhergehenden Ansprüche, **dadurch gekennzeichnet, dass** der Umluftkanal (30) eine Vielzahl von Umluftklappen (34, 44) aufweist, die zur gemeinsamen Regelung des Luftstroms an der Umluftöffnung (32) parallel geschaltet sind, wobei in einer Mischluftstellung der Saugvorrichtung (4) die erste Frischluftklappe (26) und wenigstens eine der Umluftklappen (34, 44) geschlossen sind und die zweite Frischluftklappe (28) und wenigstens eine der Umluftklappen (34, 44) wenigstens zum Teil geöffnet sind.

14. Saugvorrichtung nach Anspruch 13, **dadurch gekennzeichnet, dass** im Einbauzustand der Saugvorrichtung (4) eine erste Umluftklappe (34) tiefer als die erste Frischluftklappe (26) und höher als eine zweite Umluftklappe (44) angeordnet ist, wobei in einer Mischluftstellung der Saugvorrichtung (4) die erste Frischluftklappe (26) und die erste Umluftklappe (34) geschlossen sind und die zweite Frischluftklappe (28) und die zweite Umluftklappe (44) wenigstens zum Teil geöffnet sind.

15. Saugvorrichtung nach Anspruch 14, **dadurch gekennzeichnet, dass** in der Mischluftstellung der Saugvorrichtung (4) die wenigstens zum Teil geöffnete zweite Umluftklappe (44) eine Ausnehmung (46) zum Aufnehmen und Speichern von Fluid aufweist.

## Revendications

1. Dispositif d'aspiration d'un système de climatisation de véhicule, comportant
une chambre d'aspiration (12) pour de l'air frais (14) et/ou de l'air de recyclage (16),
une unité de ventilateur (18) qui est adjacente à la chambre d'aspiration (12) par le biais d'une ouverture d'aspiration (20),
un canal d'air frais (22) qui s'ouvre sur la chambre d'aspiration (12) par le biais d'une ouverture d'air frais (24) et au moins deux volets d'air frais (26, 28) qui sont reliés en parallèle pour une régulation commune du flux d'air au niveau de l'ouverture d'air frais (24) et
un canal d'air de recyclage (30) qui s'ouvre dans la chambre d'aspiration (12) par le biais d'une ouverture d'air de recyclage (32) et qui a au moins un volet d'air de recyclage (34) pour réguler le flux d'air au niveau de l'ouverture d'air de recyclage (32),
dans lequel, dans l'état installé du dispositif d'aspiration (4), un premier volet d'air frais (26) est agencé plus bas qu'un deuxième volet d'air frais (28) et l'au moins un volet d'air de recyclage (34) est agencé plus bas que le premier volet d'air frais (26),
**caractérisé en ce que**,
dans une position d'air mélangé du dispositif d'aspiration (4), le premier volet d'air frais (26) est fermé et le deuxième volet d'air frais (28) et l'au moins un volet d'air de recyclage (34) sont au moins partiellement ouverts.

2. Dispositif d'aspiration selon la revendication 1, **caractérisé en ce que** les volets d'air frais (26, 28) sont accouplés mécaniquement l'un à l'autre, en particulier au moyen d'un disque à cames.

3. Dispositif d'aspiration selon la revendication 1 ou 2, **caractérisé en ce que** les volets d'air frais (26, 28) et l'au moins un volet d'air de recyclage (34) sont accouplés mécaniquement l'un à l'autre, en particulier au moyen d'un disque à cames.

4. Dispositif d'aspiration selon l'une des revendications précédentes, **caractérisé en ce que** les volets d'air frais (26, 28) sont des volets de fermeture pivotants.

5. Dispositif d'aspiration selon l'une des revendications précédentes, **caractérisé en ce que** l'au moins un volet d'air de recyclage (34) est un volet de fermeture pivotant.

6. Dispositif d'aspiration selon l'une des revendications précédentes, **caractérisé en ce que**, dans l'état installé du dispositif d'aspiration (4), l'ouverture d'air frais (24) et l'ouverture d'air de recyclage (32) sont situées au moins partiellement l'une au-dessus de l'autre lorsqu'elles sont vues verticalement de dessus.

7. Dispositif d'aspiration selon l'une des revendications précédentes, **caractérisé en ce qu'**à chaque volet d'air frais (26, 28) est associée une section transversale partielle de l'ouverture d'air frais (24), laquelle section transversale peut être fermée par le volet d'air frais (26, 28) respectif et, dans l'état installé du dispositif d'aspiration (4), une section transversale partielle qui est associée au premier volet d'air frais (26) étant située au moins partiellement au-dessus de l'ouverture d'air de recyclage (32) lorsqu'elle est vue verticalement de dessus.

8. Dispositif d'aspiration selon l'une des revendications précédentes, **caractérisé en ce qu'**à chaque volet d'air frais (26, 28) est associée une section transversale partielle de l'ouverture d'air frais (24), laquelle section transversale peut être fermée par le volet d'air frais (26, 28) respectif et, dans l'état installé du dispositif d'aspiration (4), une section transversale partielle qui est associée au deuxième volet d'air frais (28) étant située à l'extérieur de l'ouverture d'air de recyclage (32) lorsqu'elle est vue verticalement de dessus.

9. Dispositif d'aspiration selon l'une des revendications précédentes, **caractérisé en ce que**, dans l'état installé du dispositif d'aspiration (4), l'ouverture d'air frais (24) définit un plan (E₁) qui s'étend de manière oblique par rapport à un plan horizontal (H).

10. Dispositif d'aspiration selon l'une des revendications précédentes, **caractérisé en ce que**, dans l'état installé du dispositif d'aspiration (4), l'ouverture d'air de recyclage (32) définit un plan (E₂) qui s'étend de manière oblique par rapport à un plan horizontal (H).

11. Dispositif d'aspiration selon l'une des revendications précédentes, **caractérisé en ce que**, dans l'état installé du dispositif d'aspiration (4), l'ouverture d'aspiration (20) définit un plan (E₃) qui s'étend de manière sensiblement verticale.

12. Dispositif d'aspiration selon l'une des revendications précédentes, **caractérisé en ce qu'**un plan (E₁) défini par l'ouverture d'air frais (24) et un plan (E₂) défini par l'ouverture d'air de recyclage (32) se croisent et s'ouvrent en forme de V par rapport à l'unité de ventilateur (18).

13. Dispositif d'aspiration selon l'une des revendications précédentes, **caractérisé en ce que** le canal d'air de recyclage (30) a une pluralité de volets d'air de recyclage (34, 44) qui sont reliés en parallèle pour une régulation commune du flux d'air au niveau de l'ouverture d'air de recyclage (32) et, dans une position d'air mélangé du dispositif d'aspiration (4), le premier volet d'air frais (26) et au moins l'un des volets d'air de recyclage (34, 44) étant fermés et le deuxième volet d'air frais (28) et au moins l'un des volets d'air de recyclage (34, 44) étant au moins partiellement ouverts.

14. Dispositif d'aspiration selon la revendication 13, **caractérisé en ce que**, dans l'état installé du dispositif d'aspiration (4), un premier volet d'air de recyclage (34) est agencé plus bas que le premier volet d'air frais (26) et plus haut qu'un deuxième volet d'air de recyclage (44) et, dans une position d'air mélangé du dispositif d'aspiration (4), le premier volet d'air frais (26) et le premier volet d'air de recyclage (34) étant fermés et le deuxième volet d'air frais (28) et le deuxième volet d'air de recyclage (44) étant au moins partiellement ouverts.

15. Dispositif d'aspiration selon la revendication 14, **caractérisé en ce que**, dans la position d'air mélangé du dispositif d'aspiration (4), le deuxième volet d'air de recyclage (44) au moins partiellement ouvert a un évidement (46) pour recevoir et stocker un fluide.
